# EUROPEAN PATENT SPECIFICATION

(11) **EP 0 615 696 B1**
(45) Date of publication and mention of the grant of the patent: **04.09.1996**
(21) Application number: 94200663.6
(22) Date of filing: 15.03.1994
(51) Int. Cl.: A23P 1/08, A23C 19/16, A23L 1/0532, C08L 5/04

(54) **Composition comprising alginate and rice starch**
Alginat und Reisstärke enthaltende Zusammensetzung
Composition contenant de l'aginate et de l'amidon de riz

(30) Priority: 16.03.1993 NL 9300740; 28.05.1993 NL 9300922
(43) Date of publication of application: 21.09.1994
(73) Proprietor: FRIESLAND (FRICO-DOMO) COOPERATIEVE B.A., NL-8938 AN Leeuwarden (NL); PRIMUS BEHEER B.V., NL-1505 GB Zaandam (NL)
(72) Inventor: van de Akker, Theodorus Adrianus Maria, NL-1506 BG Zaandam (NL); Hup, Gerard, NL-8921 TX Leeuwarden (NL)
(74) Representative: Smulders, Theodorus A.H.J., Ir.

(56) References cited:
- WO-A-92/02147
- DE-C- 858 631
- FR-A- 2 268 476
- FR-A- 2 673 077
- GB-A- 1 099 820
- US-A- 4 296 140
- PATENT ABSTRACTS OF JAPAN vol. 5, no. 114 (C-064)23 July 1981 & JP-A-56 055 162 (KIBUN KK) 15 May 1981
- PATENT ABSTRACTS OF JAPAN vol. 13, no. 546 (C-661)6 December 1989 & JP-A-01 222 743 (KANEBO LTD) 6 September 1989

## Description

The invention relates to a method of coating a product, wherein a product is treated with a solution of an alginate and rice starch, and to the use of a composition comprising rice starch and alginate in specific weight ratios as packing material, laminate and band coating for cheese.

In this specification, by the term "alginate" is meant a hydrocolloid or a macromolecular polysaccharide substantially composed of molecules of mannuronic acid and/or glucuronic acid, more in particular of D-mannuronic acid and/or L-glucuronic acid, also referred to as L-guluronic acid. In food industry, alginates are mainly used as stabilizers, gelling and thickening agents. In many cases, these hydrocolloids are attractive because of the strong viscosity-increasing and gel-forming capacity coupled to a relatively low cost price.

The most conventional raw material for alginate is brown seaweed, more in particular brown seaweed of the types *Macrocystis*, *Laminaria* and *Ascophyllum*. In these weeds, alginates are present as alginic acid and the sodium, potassium, calcium and magnesium salts thereof. The alginate is extracted from this raw material by boiling out the weed with a lye solution to extract alginic acid. Subsequently, this acid can be precipitated as an insoluble calcium salt, further purified and reconverted into the acid. From alginic acid the alginate salts may be prepared, if desired. Sodium alginate is used most in the food industry. For a more detailed survey of the isolation of alginates from brown seaweed, reference can for instance be made to Kirk-Othmer, Encyclopedia of Chemical Technology, third Edition, Volume 12, (1980) John Wiley & Sons, New York, page 52, and the article "Alginaten breed toepasbaar in levensmiddelenindustrie" from Food Management, December 1989, pages 42 and 43.

Water-soluble alginates, and more in particular sodium alginates, react with different polyvalent cations to form gels. This can be used for film formation. Of the polyvalent cations that can be used, calcium ions are the most effective as a gelling agent. In essence, there are two methods for gelling alginates, dissolved in water, under the influence of polyvalent cations. In this connection, reference is made to Food Technology, December 1986, page 50.

For instance, polyvalent cations can be released homogeneously and gradually in an alginate solution or suspension, so that a uniform gelling occurs. This can be established by dispersing a polyvalent cation salt, for instance a calcium salt, having a low solubility, in the alginate solution. Due to the interaction between the calcium present, in ionic form, in the solution and the alginate polymers, more of the solid salt is allowed to dissolve. After some time, this will result in the formation of a uniform gel. The gel formation cannot only be regulated by the solubility product of the cation salt. Also, variations in, for instance, pH and/or temperature can be used for regulating the release of polyvalent cations through the alginate suspension.

A second method for forming alginate gels involves the diffusion of cations in the alginate solution. When solutions of alginates and, for instance, calcium ions are contacted with each other, a gel develops on the contact surface almost directly. Subsequently, the gel formation continues by diffusion of the cations through the gel membrane of the boundary surface.

In Japanese publication 01 222 743 (see Patent Abstracts of Japan Vol. 13, No. 546 (C-661), December 6, 1989) a food product is described that can be prepared from 0.3-5% sodium alginate and 5-15% rice starch. This product, which may contain rice starch and alginate in a weight ratio of 1:1, is boiled and is meant to be subsequently baked. The food product is said to retain its shape excellently and to have an excellent texture after baking.

Japanese publication 56 055 162 (see Patent Abstracts of Japan Vol. 5, No. 114 (C-064), July 23, 1981) describes an aqueous food product. This product comprises a water-soluble polymer, for instance sodium alginate, and a polymer that is swellable or soluble in water, for instance rice starch. In the presence of a calcium salt, a moldable product is formed from the aqueous product. The aqueous product, still liquid, can be mixed with, for instance, fish, meat, beans, mushrooms, etc. and subsequently brought into a particular shape.

FR-A-2 673 077 relates to a method of coating a candied edible food product with a film prepared from alginate gel or pectate gel. The film is obtained by soaking the food product in an alginate or pectate solution, and subsequently soaking the product in a bath containing calcium or aluminium salts. In order to modify the film properties, such as the thickness and permeability, an additive can be added to the alginate or pectate solution. As example of this additive pregelatinized starch is given.

In FR-A-2 268 476 a mixture of 25-55 parts sodium alginate, 0-30 parts of a cold water soluble starch and calcium salts is described for coating foodstuffs and in particular bakery products, meat and fish. In the sole working example, a majority of starch as compared to the alginate is used.

In the method and applications of the present invention, use is made of the fact that when, during the gel formation of alginates, rice starch is present in the alginate solution or suspension in a weight ratio alginate/rice starch of 1/1-50/1, a solid substance or gel is formed that has very special properties.

The object of the present invention is to make use of the advantageous properties found of the combination of rice starch and alginate in providing packing materials, for instance coatings for food products.

The invention relates to a method of coating a product, wherein a product is treated with a solution of an alginate and rice starch having a viscosity of 30-150 poises measured at room temperature, with the weight ratio between the alginate and the rice starch varying from 6:1 to 50:1, which product contains polyvalent cations, and/or wherein a suitable gelling agent is added to the treated product.

The invention also relates to the use of a composition comprising rice starch and alginate in a weight ratio of between 1:1 and 1:50 as packing material; the use of a plurality of layers of a composition comprising rice starch and alginate in a weight ratio of between 1:1 and 1:3 as on each other so as to form a laminate; and the use of a composition comprising rice starch and alginate in a weight ratio of between 1:6 and 1:50 as band coating for cheese.

In these uses the rice starch should be present in the gel-forming solution or suspension during the gelling of the alginate.

The gelatinizing characteristic of rice starch and the drying characteristic of alginate prove to be excellently compatible with each other. When rice starch is present in the gel-forming solution or suspension during the gelling of alginate, it crosslinks with the alginate to form a mechanically very strong product. Due to the pseudoplastic character of alginate, the composition according to the invention is impact-resistant and is not likely to break. This renders the rice starch/alginate composition very suitable for packing purposes. Other specific advantages of the packing materials according to the invention will be explained hereinbelow.

When rice starch is present in an amount of less than 2% by weight based on the alginate, the composition loses its advantageous properties.

According to the invention, use is made of solutions or suspensions and of compositions in solid form or in gel form which always comprise alginate and rice starch, i.e., the invention comprises the use of compositions wherein rice starch and alginate are present in the above-mentioned proportions, both in the gelled and in the ungelled form. More particularly, the invention relates to the use of a composition substantially consisting only of rice starch and alginate.

In a preferred embodiment, the starting composition for the packing or coating material according to the invention has a solid form or a gel form, which composition can be obtained by gelling a solution of an alginate in the presence of rice starch under the influence of a gelling agent. For this, generally, a water-soluble alginate is used, for instance an alkali metal alginate or ammonium alginate. Preferably, sodium alginate is used.

In a preferred embodiment, the composition comprises rice starch and alginate in a weight ratio of between 1:6 and 1:50, more preferably between 1:8 and 1:40, and most preferably between 1:14 and 1:33.

Although in essence, any polyvalent cation can be used as a gelling agent, the gelling agent is preferably a source of magnesium ions or calcium ions, for instance an aqueous solution of Mg salts and Ca salts.

As is mentioned above, the alginate can be brought into a gel form through the homogeneous and gradual release of polyvalent cations or through the diffusion of cations in an alginate solution or suspension. According as the cations are contacted with the alginate in a greater concentration, the gel-forming process will be quicker.

By bringing a solution of alginate and rice starch into a shape in a specific ratio and, subsequently, allowing this mixture to gel under the influence of for instance a calcium salt and, if necessary, allowing it to dry, a shaped product is created. Depending on the form, this product can, on the basis of its properties, advantageously be used in a number of applications.

For instance, the composition can be brought into a sheet or film form. Because the composition is mechanically strong and biodegradable, in this form it is highly suitable for serving as biodegradable packing material. More in particular, this material is extremely suitable for being used as packing for food products, as this material has a neutral smell and taste.

The strength of the packing material can be modified by producing a laminate, for instance by alternately casting an alginate rice starch suspension and allowing it to gel or by rolling. In addition to adapting the thickness of the material, it is possible to adapt the pliability and foldability of this packing material to the consumer's wishes by regulating the degree of drying and/or by adding additional admixtures.

If a laminate is prepared from the composition according to the invention, the alginate:rice starch ratio preferably varies between 1:1 and 3:1.

As the composition according to the invention is not only biodegradable but also edible, this packing material has the additional advantage that, in principle, it need not be removed from a food product. In this connection, conventional aromatic and/or flavor substances, fit for human consumption, and, if necessary, coloring agents, may be added to the composition according to the invention.

Also, brighteners, for instance carboxymethylcellulose, and preservatives, such as natamycine and ascorbic acid, may be added to the composition according to the invention.

After the composition according to the invention has dried in, a relatively open network structure is formed. By providing different layers of the composition on top of each other, a laminate may be produced of which in particular the permeability to water vapor, oxygen and carbon dioxide can be adjusted. Optionally, the packing material may also be rendered impermeable, for instance by means of a wax coating, enabling storage of liquid products in a suitably shaped container.

The composition according to the invention may also be provided like a skin around a food product, for instance sausage, by means of coextrusion techniques.

By means of diffusion gelling, the composition according to the invention may also be provided in liquid form on or around a product, in particular a food product. Because during the gelling and drying process, the layer that is being formed shrinks, a rice starch alginate composition thus applied may be used to prevent deformation of a particular product or, by contrast, to effect deformation.

As is already described above, in the case of diffusion gelling it is essential that the cations are capable of diffusing to the liquid alginate composition via the boundary face of the rice starch alginate composition and the cation-containing medium. By providing the alginate solution on a product containing polyvalent cations, for instance cheese, which by nature contains calcium ions, or a product impregnated with a cation-containing solution, a (partially) enclosed product can be obtained.

It has been found that if a cylindrical cheese is rolled like a wheel through a viscous composition according to the invention, and this composition gels, a band coating is formed around the cheese, which, depending on the thickness thereof, exerts a force on the cheese sufficient for the cheese not to deform. This is important in particular in the preparation of so-called "holey cheese", such as Maasdam cheese. Hitherto, these cheeses have been provided with a band from tea bag paper or from cellophane. In this connection, reference can be made to Dutch patent specification 180.898 and European publication EP-0 418 977.

Additional advantages of a band coating manufactured from the composition according to the invention are in particular the edibility and the anchoring of the band coating to the cheese. When a cheese is coated with a liquid alginate composition, the gelling composition compounds directly with calcium-containing proteins of the cheese mass. Due to this property, the occurrence of breaking of the band coating is no longer a problem, because in that case, the supporting function is maintained due to the anchoring of the rice starch alginate composition to the cheese. On the other hand, a band coating of tea bag paper or cellulose loses its supporting function after breaking.

Depending on the application of the composition according to the invention, it may be necessary to adapt the ratio of rice starch:alginate. As already indicated above, for manufacturing a laminate, the ratio of rice starch:alginate will vary between 1:1 and 1:3. When a product is coated with the composition according to the invention, the rice starch:alginate ratio will preferably be between 1:6 and 1:50. However, the ratio will always be between 1:1 and 1:50. In dependence on the intended application, this ratio can be experimentally determined without any problem by a skilled person.

The composition according to the invention can simply be provided in liquid form on products containing polyvalent cations. As mentioned above, after the rice starch alginate solution has dried in, a relatively open network structure is formed. By providing on a product different layers of alginate rice starch from a solution, the properties of the coating can be modified.

The invention relates to a method of coating a product, wherein a product is treated with a solution of an alginate and rice starch having a viscosity of 30-150 poises, measured at room temperature, the weight ratio between the alginate and the rice starch varying from 6:1 to 50:1, preferably from 8:1 to 40:1, most preferably from 14:1 to 33:1, which product contains polyvalent cations, and/or wherein a suitable gelling agent is added to the treated product. A solution having this viscosity can be provided manually as well as mechanically on a product to be coated. For instance, this solution or liquid suspension may be sprayed or poured on a product to be coated. It is also possible to smear the product to be coated with a sponge, or to bring that product into a bath containing the viscous composition according to the invention.

Preferably, the product to be coated is treated with a composition having a pH varying between 3.5 and 7.5, preferably between 4.3 and 5.6.

A preferred embodiment of the method according to the invention is characterized in that more layers of alginate rice starch are provided on the product to be coated.

Preferably, the product to be coated is a food product.

Other suitable techniques for coating a product with the composition according to the invention or for shaping this composition per se are within the scope of a skilled person.

The invention will be further explained on the basis of the following examples.

### Example 1

In a Hobart® mixer with a suitable beater, an amount of 22 l cold water was measured out. To this, 1260 g of the commercially available sodium alginate composition Satialgine®, 63 g rice starch (Remy B®) and 44 g ascorbic acid were slowly added. This mixture was mixed for approximately 1.5 h to form a homogeneous mass, the rotational speed being slowly increased from 50 to 800 cycles per minute. The smooth viscous mass was transferred into a plastic bucket, closed with a lid, and stored until the moment of use.

### Example 2

A number of brine-dry Maasdam cheeses, already plastified one-sidedly in a plasticizer, were treated with the viscous mass as prepared in Example 1. By means of a sponge, an approximately 1 mm thick layer of the mass was manually provided on the band (raised round side face) of the cheeses. The cheeses were air-dried in a conventional manner in a cheese storehouse. After drying, the other flat side of the cheese was plasticized in a known manner the next day. After this, another, similar layer of the viscous mass was provided with a sponge. Subsequently, the normal turning and plasticizing program for Maasdam cheeses could be followed. After drying, the gelled mass on the band formed an excellently anchored band coating for the cheeses.

At an age of 14 days, the cheeses were placed in a hot space at 19°C. After a heating period of 2 weeks, the thus treated cheeses had a fine shape and had not sagged, unlike the cheeses without the treatment with the composition according to Example 1 or without any other supporting banderol. In comparison with cheeses having a supporting banderol of cellophane, the raised round side of the cheeses treated according to this example was completely smooth and without any visible ridges or creases of the banderol.

### Example 3

A number of brine-dry Maasdam cheeses were provided with a band coating from the viscous mass as prepared in Example 1. By means of a sponge, an approximately 1 mm thick layer was manually provided on the band of these cheeses. By means of a sponge, one of the flat sides was treated with the sodium alginate solution as described in example 1 of Dutch patent application 9300470. The cheeses were air-dried in the conventional manner in a cheese storehouse. After drying, the other flat side of the cheese was treated in a similar manner with the sodium alginate solution. After this, another layer of viscous mass according to Example 1 was provided with a sponge. Each time after drying, several layers of the sodium alginate solution according to NL-A-9300470 were provided all over the cheese. Further, the normal turning program for Maasdam cheeses was followed. After drying, the gelled mass on the band formed an excellently anchored band coating, forming one whole with the cheese skin.

At an age of 14 days, the cheeses were placed in a hot space at 19°C. After a heating period of 2 weeks, the thus treated and matured cheeses had a fine shape and had not sagged, unlike the cheeses without the treatment with the composition according to Example 1 or without any other supporting banderol. The cheeses treated according to this example had a completely smooth band coating without any visible ridges and creases.

### Example 4

With stirring, a suspension was formed from 10 l water, 1100 g alginate and 650 g rice starch. An amount of this suspension was poured out over a flat sheet of glass. To this poured-out suspension, calcium chloride was added in an amount yielding 15-20 g calcium ions, based on the total amount of suspension. After drying of the poured-out layer, another amount of suspension was poured out, to which calcium ions were added. This was repeated some times to form a laminate.

Both through thermal deformation and through conical adhesion, the laminate could be used as packing material.

### Example 5

From 10 l water, 950 g alginate and 600 g rice starch, a suspension as in Example 4 was prepared. Immediately after adding 15 g calcium ions, a laminate was formed through rolling. This laminate could be used in the same manner as the laminate obtained through pouring according to Example 4.

## Claims

1. A method of coating a product, wherein a product is treated with a solution of an alginate and rice starch having a viscosity of 30-150 poises measured at room temperature, the weight ratio between the alginate and the rice starch varying from 6:1 to 50:1, said product containing polyvalent cations, and/or wherein a suitable gelling agent is added to the treated product.

2. A method according to claim 1, wherein the treatment of the product is carried out at a pH varying between 3.5 and 7.5, preferably between 4.3 and 5.6.

3. A method according to claim 1 or 2, wherein more layers of alginate and rice starch are provided on the product to be coated.

4. A method according to any one of claims 1-3, wherein a food product is coated.

5. Use of a composition comprising rice starch and alginate in a weight ratio of between 1:1 and 1:50, obtainable by gelling the gel-forming solution or suspension of the alginate in the presence of rice starch, as packing material.

6. Use of a plurality of layers of a composition comprising rice starch and alginate in a weight ratio of between 1:1 and 1:3, obtainable by gelling the gel-forming solution or suspension of the alginate in the presence of rice starch on top of each other, as a laminate.

7. Use of a composition comprising rice starch and alginate in a weight ratio of between 1:6 and 1:50, obtainable by gelling the gel-forming solution or suspension of the alginate in the presence of rice starch, as band coating for cheese.

8. Use according to any one of claims 5-7, wherein the composition substantially consists of rice starch and alginate.

9. Use according to any one of claims 5-8, wherein the composition is in solid form or in gel form, said composition being obtainable by gelling a solution of an alginate in the presence of rice starch under the influence of a gelling agent.

10. Use according to claim 9, wherein a water-soluble alginate is used.

11. Use according to claim 9 or 10, characterized in that the alginate is sodium alginate.

12. Use according to any one of claims 9-11, wherein the gelling agent is a source of calcium ions.

## Patentansprüche

1. Verfahren zur Beschichtung eines Produktes, dadurch gekennzeichnet, daß ein Produkt mit einer Alginat und Reisstärke enthaltenden Zusammensetzung behandelt wird, die eine bei Raumtemperatur gemessene Viskosität von 30 bis 150 Poise sowie ein Gewichtsverhältnis zwischen Alginat und Reisstärke von 6:1 bis 50:1 aufweist, wobei das Produkt polyvalente Kationen enthält, und/oder dadurch gekennzeichnet, daß dem behandelten Produkt ein geeignetes Geliermittel hinzugefügt wird.

2. Verfahren gemäß Anspruch 1, dadurch gekennzeichnet, daß die Behandlung des Produktes bei einem pH-Wert zwischen 3,5 und 7,5 und vorzugsweise zwischen 4,3 und 5,6 erfolgt.

3. Verfahren gemäß Anspruch 1 oder 2, dadurch gekennzeichnet, daß mehrere Schichten Alginat und Reisstärke auf das zu beschichtende Produkt aufgetragen werden.

4. Verfahren gemäß einem der Ansprüche 1 bis 3, dadurch gekennzeichnet, daß ein Nahrungsmittelprodukt beschichtet wird.

5. Gebrauch einer Reisstärke und Alginat enthaltenden Zusammensetzung mit einem Gewichtsverhältnis zwischen 1:1 und 1:50, welche durch Verfestigung der gelbildenden Lösung oder Suspension des Alginats in Anwesenheit von Reisstärke gewonnen wird, als Verpackungsmaterial.

6. Gebrauch mehrerer Schichten einer Reisstärke und Alginat enthaltenden Zusammensetzung mit einem Gewichtsverhältnis zwischen 1:1 und 1:3, welche durch Verfestigung der gelbildenden Lösung oder Suspension des Alginats in Anwesenheit von Reisstärke gewonnen wird, übereinander als Laminat.

7. Gebrauch einer Reisstärke und Alginat enthaltenden Zusammensetzung mit einem Gewichtsverhältnis zwischen 1:6 und 1:50, welche durch Verfestigung der gelbildenden Lösung oder Suspension des Alginats in Anwesenheit von Reisstärke gewonnen wird, als Bandbeschichtung für Käse.

8. Gebrauch gemäß einem der Ansprüche 5 bis 7, dadurch gekennzeichnet, daß die Zusammensetzung im wesentlichen aus Reisstärke und Alginat besteht.

9. Gebrauch gemäß einem der Ansprüche 5 bis 8, dadurch gekennzeichnet, daß die Zusammensetzung in fester Form oder in Gelform besteht, wobei die Zusammensetzung durch Verfestigung einer Alginatlösung in Anwesenheit von Reisstärke unter Einwirkung eines Geliermittels gewonnen wird.

10. Gebrauch gemäß Anspruch 9, dadurch gekennzeichnet, daß ein wasserlösliches Alginat verwendet wird.

11. Gebrauch gemäß Anspruch 9 oder 10, dadurch gekennzeichnet, daß es sich bei dem Alginat um ein Natriumalginat handelt.

12. Gebrauch gemäß einem der Ansprüche 9 bis 11, dadurch gekennzeichnet, daß das Geliermittel eine Kalzium-Ionenquelle ist.

## Revendications

1. Une méthode de revêtement d'un produit, dans laquelle un produit est traité avec une solution d'un alginate et d'un amidon de riz ayant une viscosité de 30-150 poises, mesurée à température ambiante, le rapport pondéral entre l'alginate et l'amidon de riz variant de 6:1 à 50:1, ledit produit contenant des cations polyvalentes, et/ou dans lequel un agent gélifiant approprié est ajouté au produit traité.

2. Une méthode selon la revendication 1, dans laquelle le traitement du produit est effectué à un pH variant entre 3.5 et 7.5, de préférence entre 4.3 et 5.6.

3. Une méthode selon l'une quelconque des revendications 1 ou 2, dans laquelle plusieurs couches d'alginate et d'amidon de riz sont déposées sur le produit devant être revêtu.

4. Une méthode selon l'une quelconque des revendications 1-3, dans laquelle un produit alimentaire est revêtu.

5. Utilisation d'une composition comprenant de l'amidon de riz et de l'alginate dans un rapport pondéral compris entre 1:1 et 1:50, pouvant être obtenue en gélifiant la solution ou suspension gélifiable de l'alginate en présence d'amidon de riz, comme matériau d'emballage.

6. Utilisation d'une pluralité de couches d'une composition comprenant de l'amidon de riz et de l'alginate dans un rapport pondéral compris entre 1:1 et 1:3, pouvant être obtenue en gélifiant la solution ou suspension gélifiable de l'alginate en présence d'amidon de riz, les unes sur les autres, comme matériau multicouche.

7. Utilisation d'une composition comprenant de l'amidon de riz et de l'alginate dans un rapport pondéral compris entre 1:6 et 1:50, pouvant être obtenue en gélifiant la solution ou suspension gélifiable de l'alginate en présence d'amidon de riz, comme revêtement en bande pour du fromage.

8. Utilisation selon l'une quelconque des revendications 5-7, dans laquelle la composition est essentiellement constituée d'amidon de riz et d'alginate.

9. Utilisation selon l'une quelconque des revendications 5-8, dans laquelle la composition se trouve sous la forme solide ou sous la forme d'un gel, ladite composition pouvant être obtenue en gélifiant une solution d'un alginate en présence d'amidon de riz sous l'influence d'un agent gélifiant.

10. Utilisation selon la revendication 9, dans laquelle on utilise un alginate soluble dans l'eau.

11. Utilisation selon la revendication 9 ou 10, caractérisée en ce que l'alginate est de l'alginate de sodium.

12. Utilisation selon l'une quelconque des revendications 9-11, dans laquelle l'agent gélifiant est une source d'ions calcium.
